# EUROPEAN PATENT SPECIFICATION

(11) **EP 2 468 107 B1**
(45) Date of publication and mention of the grant of the patent: **30.04.2014**
(21) Application number: 11380091.6
(22) Date of filing: 08.11.2011
(51) Int. Cl.: A23B 7/16, A23B 7/154, A23B 7/157, A23L 3/3517, A23L 3/358

(54) **Coating for fruit and method for its application**
Beschichtung für Früchte und Verfahren zur deren Auftragung
Revêtement pour fruits et son procédé d'application

(30) Priority: 21.12.2010 ES 201031895
(43) Date of publication of application: 27.06.2012
(73) Proprietor: DECCO WORLDWIDE POST-HARVEST HOLDINGS CO. B.V., 3196 KE Vondelingenplaat (NL)
(72) Inventor: Gómez Hernández, Enrique, 46988 VALENCIA (ES); Mascaros Torres, Juan José, 46988 VALENCIA (ES)
(74) Representative: Ungria López, Javier

(56) References cited:
- CN-A- 1 891 058
- CN-A- 101 053 343

## Description

The present invention relates to a formulation specific for its application in post-harvest treatment in fruit processing plants, more specifically citrus fruits, apples and pears, and the use of fruit coatings by means of food additives.

Fruits, especially citrus fruits, apples and pears need after harvest and during the marketing period (the period known as post-harvest or post-collection, which is the time from the collection to its arrival to the final consumer), coatings based on waxes to retard senescence, reduce weight loss, control the wrinkling, increase the marketing period and improve their appearance by adding gloss. All this must be obtained while avoiding internal fermentation processes that can produce degradation of sugars and production of alcohols and aldehydes producing bad flavors. When waxing the fruit, it is essential to consider whether the crop is a climacteric fruit (i.e., with a climacteric that implies a rapid acceleration of the respiration of the fruit) such as pears and apples, or non-climacteric wherein this does not happen, as is the case of citrus fruits. According to this characterization, one or another formulation can be used in an optimal way.

Thus, the waxes used in non-climacteric fruits, such as is the case of citrus fruits, are normally oxidized polyethylene, carnauba, shellac and other coatings such as sucrose esters of fatty acids, maltodextrin, lecithin, carboxymethylcellulose, hydroxymethylcellulose, among others.

The waxes used in climacteric fruits, such as apples and pears, are usually formulated based on carnauba wax and shellac, shellac being the preferred one. Other waxes such as oxidized polyethylene wax are not authorized - because of their physicochemical characteristics - besides being technologically unfeasible in this type of fruit.

Another important aspect is the application. Both in citrus fruits and in apples and pears, a drying achieved by passing the fruit inside a tunnel is necessary after waxing. This is because the waxy formulations are formulated as aqueous emulsions, so that after their application, water should be evaporated for forming the actual wax film. The higher the drying temperature in the tunnel is, the greater the impact on the organoleptic and physiological characteristics of the fruit, since the higher the drying temperature, the greater the collateral dehydration of the fruit is. Moreover, its metabolic activity increases. The sweating of the fruit also occurs under conditions of high humidity. All these effects are even greater in the case of apples, due to its waxy nature, and climacteric metabolism.

Therefore, one of the requirements for improving the properties of waxes is to achieve that this drying temperature be as low as possible. For this purpose, using non-ionic formulations that prevent the use in the emulsion of hygroscopic fatty acid soaps can be considered. The absence of these hygroscopic products-additives promotes the elimination of the water contained in the film and therefore drying is achieved more easily. However, the reduction of this drying temperature is moderate. The reduction is greater the larger the surface tension reduction is achieved in the formulation, since this low surface tension of the formulation favors greater wettability on the surface of the fruit. As a result a faster formation of the film is obtained that also favors the drops of excess water to form an outer film with an easier evaporation. It is also known experimentally that this effect is greater when using oxidized polyethylene-based waxes than when using carnauba waxes, and the effect of rapid drying is greater the higher the saponification index of said polyethylene, within the legal parameters of acidity index. Therefore this reduction of the drying temperature, with the corresponding cost savings can be achieved in an acceptable manner when using polyethylene formulations. However, this effect is not enough when waxing without any kind of drying system have to be carried out. The drying time needed without forcing the temperature conditions (moisture gradients) does not produce satisfactory results even with oxidized polyethylene.

As for apples and pears, especially apples, legal restrictions do not allow us to apply the advantages of the polyethylene formulations, since only the carnauba and shellac (shellac) are authorized for that use. In the case of carnauba, the same reasoning as polyethylene could be applied, and develop non-ionic formulations, applying the properties explained above for polyethylene applicable to citrus fruits. However, it is known experimentally that non-ionic carnauba emulsions are not as efficient in terms of stability and reproducibility as polyethylene emulsions, which is a synthetic wax. In addition, saponification indexes of carnauba waxes cannot be modified to improve the properties of fast-drying, as is the case of polyethylene waxes, so these additional properties are also lost. But without doubt, the worst effect of non-ionic carnauba emulsions is that their high polarity causes excessive loss of weight that does not favor at all the extension, as desired, of the shelf life of apples and pears. The shellac, however, does not need to be emulsified, since in alkaline solutions it is soluble in water, and therefore the use of fatty acid, hygroscopic soaps, can be avoided.

It may arise, therefore, that the use of alkaline solutions of shellac, avoiding fatty acids, can help to find a formulation that dries faster than the usual ones. The alkali selection for this solubilization of the shellac could therefore be an agent that also had easy evaporation, such as ammonia. As explained, low surface tension helps the wax to have greater wettability and therefore the film is formed much faster and it also makes it possible to dry the wax faster. The use of film formers (like proteins) and non-ionic surfactants may therefore be desired adjuvants.

It is known experimentally that solutions of shellac, after application, form an insoluble film based on the resin. This in some conditions cannot be beneficial for the properties of the coating on the fruits. For example, if the fruit is subjected to sudden changes in temperature (cold fruits from the chamber, put out to a place with high temperatures) this can result in water condensation that makes the hydrophobic coating to be insoluble and therefore produces the phenomenon known as "bleaching" or "white spot" in which the insolubilized resin forms white deposits on the skin. To avoid this phenomenon, the state of the art indicates that it needs to be ensured that the resin is soluble. To this end, an alkali should saponify the resin so that the film of the animal resin (shellac) has hydrophilic properties so that when water condenses on the fruit skin, the coating is solubilized, and after evaporation of condensed water the film is formed again without causing that whitening. Therefore an alkali such as sodium or potassium hydroxide should be applied to the formulation.

Using a plasticizer is convenient to increase the plasticity of the film, of the glycerin or propylene glycol type, or more advent, a combination of both.

We studied different combinations of plasticizers of the glycerin and propylene glycol type, to achieve optimal conditions of use and properties, seeking gloss, gloss durability, absence of bleaching and reduction of senescence, along with a drying fast enough to avoid in the case of citrus the need of drying, and to do it at the lowest possible temperatures in apples and pears, seeking a smaller impact on these fruits that increases their quality.

The application technique of waxes and resins dissolved in organic solvents to achieve a high gloss wax coating with a solvent evaporation drying almost instantly and with good conservation properties has been known for many years. The use of these organic solvents required the use of special systems for application of the treatments, by means of closed application machines and power systems equipped to work in flammable and/or explosive atmospheres. These types of formulations have now been dismissed due to the danger both for the operator and the consumer due to the use of organic solvents.

However, the use of alcohols as solvents such as ethyl alcohol (ethanol) could be a viable way of work. Indeed, solutions of shellac or resins in high proportions of ethanol binds to an almost instant drying, a formation of a good film with excellent properties. One type of preparation of this kind would be, for example, the following:

| | |
|---|---|
| Shellac: | 10-20% |
| Alkali: | 1-5% |
| Ammonia: | 0-5% |
| Ethanol: | q.s. 100% |

However, the use of solutions in ethanol is difficult for two main reasons:
1. These solutions have very low flash points, which is why just like other formulations of resins in solvents (aromatic solvents) need special machines for their application since if not, there is a risk of deflagration/explosion/fire that is inadmissible. Similarly, alcohol vapor emissions do not allow their normal application without risks to the worker's health. Then we know that their flammability conditions its application to special application systems (machines).
2. There are legal restrictions. The use of ethyl alcohol as a solvent is not authorized in most countries in the formulation of fruit coating waxes. In most, however, it would be admitted when it is not used as solvent, but as a processing aid, that is, water is used as a solvent and ethanol merely serves as a processing aid which evaporates and disappears from the waxy film on the fruit.

So far, there had been developed a formulation for top fruit waxing treatment -"top spray"- in citrus and a shellac aqueous solution for treatment of apples and pears coatings so that the co-adjuvants and co-formulants used achieved good properties when applied on the fruit, also achieving, due to the particular formulation, a significant reduction in the drying temperature with respect to waxes typically used in both treatments of the fruit. However, although the improvement was ostensible, obtaining the required properties has not been fully achieved, that is, very fast drying that permits the application on citrus fruit with top spray treatment that does not require drying in a reasonable manner, and in the case of apples and pears, drying temperature low enough so that these fruits (climacteric fruits) do not suffer heat shock that affects their postharvest quality. It has been experimentally estimated that the drying temperature should be a maximum of 30°C. In addition to the above, waxing must provide high gloss, good maintenance thereof, absence of bleaching, and avoid, in the case of apples, problems of internal fermentation by inadequate gas exchange during respiration of the fruit.

We also know that alcoholic formulations have virtually instantaneous drying, besides promoting a better fixation of the film and they are more resistant to the bleaching effect, while having high gloss and a significant persistence of the same over time.

Taking all these parameters into account, a wax that did not require tunnel drying conditions for citrus fruits, or very moderate drying conditions in the case of apples and pears was achieved.

In patent literature there are many examples of inventions designed to preserve fruit or vegetables in general. For example, patent application EP1654933 discloses an edible coating for fruits and vegetables in order to prolong their life and keep their fresh appearance. Said composition is a phytosanitary preparation that in its preferred embodiment comprises starch derivatives (2.5 to 25%), protein (0.5 to 5%), cellulose derivatives (0.5 to 5%), co-adjuvants (0.5 to 5%) and water.

Patent application US5547693 describes a method to reduce surface discoloration caused by the development of a bleaching that occurs in fresh fruits and vegetables due to dehydration. Therefore this invention intends to obtain an hygroscopic edible coating which can be of a polyhydric alcohol salt (calcium chloride, magnesium chloride, sodium or potassium chloride), or of a lower alkyl polyhydric alcohol (glycerin polyglycerin, propylene glycol, sorbitol, mannitol 10 and polyethylene glycol 6000) and storing the coated vegetable or fruit in a gas permeable plastic container, able to maintain an internal humidity of 90 to 100%, a plastic such as low density polyethylene, high density polyethylene, polypropylene, and polyvinyl chloride. The vegetables for which this method is envisaged are mainly radishes, carrots, turnips, sweet potatos, leek, zucchini and peppers.

Application W02010/031928 discloses a device for coating food products, like fruits and vegetables, and a method to cover said products. Shellac is one of the possible components of the film-forming composition. It is also said to be preferably dissolved in an alcohol with two or three carbons. The composition comprises a base, which can be inorganic, and said base is present in a ratio between 0 and 10%. The preferred composition can be chosen from many, one of which is a food resin composition -as shellac-in alkaline medium in water.

Although the components shellac, Tween 80, potash/ammonia, ethyl alcohol, water and defoamer are mentioned, a composition like that of the present invention is neither described nor suggested.

A patent that describes a specific coating composition for citrus fruits is ES2289965, said wax is a non-ionic wax formulated with emulsifiers included in the positive list of food additives (95/2/EC), free from ammonia and other amines (morpholine). The coating is obtained by combining a non-ionic emulsion of polyethylene and/or carnauba, formulated without ammonia or morpholine, through emulsification with combinations of food additive emulsifiers and an alkali approved for use in coating of citrus fruit, plus a base composed of the shellac or rosin dissolution in water with the aid of authorized alkali.

### DESCRIPTION OF THE INVENTION

The present invention relates to a fruit coating formulation, preferably, pears, apples and citrus, comprising:

| | w/v |
|---|---|
| Shellac: | 5-21% |
| Plasticizer: | 1-5% |
| Alkali: | 1-5% |
| Polysorbate: | 1-5% |
| Ammonia (250): | 0.5-3% |
| Ethanol: | 5-20% |
| Defoamer: | 0.05-0.15% |
| Water: | q.s. 100% |

According to a particular embodiment the fruit coating formulation comprises:

| | w/v |
|---|---|
| Shellac: | 10-20% |
| Plasticizer: | 2.7-5% |
| Alkali: | 1.2-4% |
| Polysorbate: | 1-4% |
| Ammonia (250): | 0.7-2.7% |
| Ethanol: | 7-18% |
| Defoamer: | 0.08-0.15% |
| Water: | q.s. 100% |

According to a second particular embodiment the fruit coating formulation comprises:

| | w/v |
|---|---|
| Shellac: | 14-20% |
| Plasticizer: | 2.7-4% |
| Alkali: | 1.9-3.8% |
| Polysorbate: | 1.4-3.5% |
| Ammonia (25%): | 0.9-2.4% |
| Ethanol: | 10-16% |
| Defoamer: | 0.09-0.15% |
| Water: | q.s. 100% |

According to a preferred particular embodiment the fruit coating formulation comprises:

| | w/v |
|---|---|
| Shellac: | 16-20% |
| Plasticizer: | 3-3.8% |
| Alkali: | 1.4-3.3% |
| Polysorbate: | 2.2-3.15% |
| Ammonia (250): | 1.1-2% |
| Ethanol: | 12-16% |
| Defoamer: | 0.13-0.15% |
| Water: | q.s. 100% |

### EXAMPLES

### Comparative Formulation 1:

The formulation used in the tests carried out, for comparison is the same as the formulation of the invention, with the difference that it does not contain ethanol. This formulation used for comparison comprises:

### Comparative Formulation 1:

| | w/v |
|---|---|
| Shellac: | 5-21% |
| Plasticizer: | 1-5% |
| Alkali: | 1-5% |
| Polysorbate: | 1-5% |
| Ammonia (25%): | 0.5-3% |
| Defoamer: | 0.05-0.15% |
| Water: | q.s. |

A comparative formulation was prepared containing:

| | w/v |
|---|---|
| Shellac: | 20% |
| Plasticizer: | 3% |
| Alkali: | 1.5% |
| Polysorbate: | 2% |
| Ammonia (250): | 1.5% |
| Defoamer: | 0.15% |
| Water: | q.s. 100% |

Said comparative formulation was prepared as follows:
1. Fill a mixer with softened water 75%.
2. Start the agitation system.
3. Add alkali and ammonia to the shaking reactor.
4. Add polysorbate and the plasticizer.
5. Heat the water to 60°C and add the shellac until it dissolves.
6. Add the rest of the water to cool the solution.
7. Take a sample of water and mix it with the defoamer. The latter is added to the solution.
8. If the solution is not cold enough (room temperature) before packing, it is cooled by means of the jacket of the mixer.
9. Keep under stirring for 15-20 minutes before packing/storing.

### EXPERIMENTS WITH THE COMPARATIVE FORMULATION

Tests were performed to verify its effectiveness. Prior to the tests, we proceed to study the different methods of application in citrus fruits or apples.

In the case of citrus fruits, no drying tunnels are used when wanting to brighten the fruits at the end of the treatment process, and prior to shipment of the fruit to its final destination. For this purpose a top coating of wax is applied on the fruit visible to the consumer ("top spray"). As the fruit is already treated, it is not possible to pass the fruits through a drying tunnel after waxing, so it is convenient that the wax is dried as quickly as possible by itself.

In the case of apples (and pears), the problem lies elsewhere. The fruits are treated and dried after waxing, but because of their climacteric character and the fleshy nature of the fruits, with a little protective and waxy skin, unlike citrus fruit, are very sensitive to the drying temperature, so it is convenient to be able to minimize the drying needs of the tunnels. The normal drying temperatures for waxes are usually about 45°C. The intention is that these temperatures do not exceed 30°C, as is known experimentally that this is the upper limit from which the apples and pears begin to suffer heat stress.

Therefore, the experiments are different for each case, so that in citrus the "top spray" application was used, and in apples the treatment with drying tunnel in-line application, at temperatures of around 30°C.

The following are the results:

### Experiment 1. Citrus Fruits

Application method: "Top spray"
Application system: Air pressure gun/spray.
Application duration: 2 seconds/box.

### Results:

### Gloss: High Grade

Persistence of gloss after two weeks at room temperature: Good
Bleaching (24 hours at 4°C, two hours at room temperature): Acceptable
Drying: Faster than conventional waxes but not enough. It might be acceptable under certain conditions. Observations: wax buildup is produced by not achieving a drying fast enough, if not applied carefully.
Conclusions: Some clients may accept to wait until the final drying, although the properties obtained are not enough, even though they are better than those of conventional waxes. The formulation still needs more improvement.

### Experiment 2. Apples

In this case after waxing of the apples, drying in a conventional tunnel (line of treatment) at 30°C was carried out.

The results obtained were as follows:
Gloss: High
Persistence of gloss: A lose of gloss is appreciated after a month of cold storage, even though it still acceptable. Bleaching: There is no presence of bleaching, after a month in the preservation chamber at 0°C and 24 hours at room temperature.
Drying: Drying is not complete, although the fruit dries by itself within a few minutes.
Conclusions: Although the formulation has significantly improved the usual properties of waxes, fully enhancing the working conditions for our purposes has not been achieved.

Therefore, based on shellac-based formulations set forth above (Comparative Formulation 1), various concentrations of ethanol, acting as a processing aid, can be added to promote the drying of the coating after its application, these concentrations being suitable for drying without risks at 30°C or less (flash point) of the formulation reasonably above 30°C), which is achieved with the formulation of the invention:
1. Greatly improved drying of the formulation, with the same properties of the coating of Comparative Formulation 1, or improved enough for a successful application of the top spray in citrus fruit, or for sufficient in-line drying treatment of waxed apples (pears) at a temperature of 30°C.
2. Taking advantage of alcohol-based waxes, but in water-based waxes with alcohol as processing aid, so that the danger or risk of fire is greatly reduced, so that no applications with special machines for waxing with flammable products (solvent-based waxes or resins) are necessary. Thus, they can be applied as top spray on citrus or on apples in conventional lines of treatment, with low drying temperatures (30°C), therefore avoiding the thermal stress on apples at the usual wax drying temperatures of apples and pears (45°C).
3. Therefore novel development of a resin-based formulation with water acting as solvent and ethanol as a processing aid, which allows working in a legal manner, with the same properties of gloss, gloss persistence, maintenance of the organoleptic properties and control of bleaching than solvent-based waxes (alcohol acting as solvent), but significantly reducing the risk of fire. Thus, it is not necessary to work on special application machines, and therefore without having to modify currently existing facilities in the citrus, apples and pears processing plants and achieving the purposes required in the mentioned fruits.

Based on this reasoning, we proceeded to optimize the various formulations obtained with various concentrations of ethanol in their compositions proving that indeed the desired results were obtained, that is, proper drying conditions and flash point well above 30°C.

### FORMULATION OF THE INVENTION

A formulation was prepared containing:

| | w/v |
|---|---|
| Shellac: | 20% |
| Plasticizer: | 3% |
| Alkali: | 1.5% |
| Polysorbate: | 2% |
| Ammonia (250): | 1.5% |
| Ethanol: | 15.8% |
| Defoamer: | 0.15% |
| Water: | q.s. 100% |

Said formulation was prepared as follows:
1. Fill a blender with softened water 75%;
2. Start the agitation system;
3. Add alkali and ammonia to the mixing reactor;
4. Add polysorbate and the plasticizer;
5. Heat the water to 60°C and add the shellac until it dissolves;
6. Add the rest of the water to cool the solution;
7. Take a sample of water and mix it with the defoamer. The latter is added to the solution;
8. If the solution is not cold enough (less than 25°C), it is cooled before packing by means of the jacket of the mixer;
9. Add ethanol 99° and immediately close the extractor and the manhole;
10. Keep under stirring for 15-20 minutes before packing or storing.

### EXPERIMENTS WITH THE FORMULATION OF THE INVENTION

The following are some tests carried out with the formulation of the invention:

### Experiment 3

Application: Top spray on citrus
Test type: Commercial on fruit shipped to final destination Application time: 2 seconds

### Results:

Gloss: High
Persistence of gloss: High
Bleaching: None
Drying: High, not comparable to wax with pure solvent, but suitable for the function.
Conclusions: Wax suitable for top spray use in citrus.

### Experiment 4

Application: Apple waxing
Description: comparative test of three different types of wax for apples from April 22 to May 6, 2010.
Test type: Commercial in apple treatment plant
Plant: Luis Gil Hnos. Zaidín (Huesca).
Characteristic of the drying system: Citrus machine adapted to apple, 1.5 m. passage width.
- Dry emptier.
- 2 bars (8 nozzles) for washing with not recirculated water, without detergent, on brushes.
- Pre-drying by air, 4 counter direction fans. On brushes bars, no donuts.
- Swinging wax applicator with 2 nozzles on brush.
- Drying tunnel 9 m long. Hylo heater, working at 30°C.

Waxes studied:
- Conventional wax. Observations: Ammonia strong odor.
- Comparative formulation: No ammonia odor. This being the first formulation developed, base of the invention.
- Formulation of the invention. Slight alcoholic odor, this being the final wax of the invention.
- Fruit: French Fuji Apple (Hoogland NECAP H.S.P.) 80-85 precalibrated, striped bicolor. Origin of the fruits Caberol (Alcarrás, Lleida).
- No tempered. Waxed direct from chamber.

### Waxing:

Take two black plastic boxes, double coat, and mark them "conventional wax". These two waxes, without prior waxing treatment, are used to apply the commercial wax on the treatment line used in the plant ("conventional wax").

It is changed first to "Comparative Formulation" wax, shown above, which contains no ethanol, and after a certain period of application on the rollers of the treatment line, for the complete replacement of the previous wax in the system, take two more boxes of fruit, without any prior waxy treatment, and mark them "Comparative Formulation".

Change in the same way finally to the "Formulation of the invention" wax, object of the invention, and take again a couple of boxes without any prior waxy treatment, marked "Formulation of the invention" and wax them.

Freshly waxed, the technicians from the storehouse, provided the following order of gloss:
1. Formulation of the invention
2. Conventional formulation
3. Comparative formulation.

The formulation of the invention, water/alcohol is the one that is dried first, and the one that sticks the least, that is, the technological effect of better drying is achieved.

Samples from 4 fruits are taken from each wax in sealed plastic bag for the 24 h. cold test (drowning).

The sample of the Formulation of the invention, has less condensation on the surface, right out of cold, and remains being the glossiest, even after 6 h. at room temperature. The comparative Formulation is the less glossy. None of them has bleaching or film rupture.

48 h later, there is still no bleaching or film rupture on the fruits.

One week later, right out of the cold chamber, the comparative Formulation keeps more gloss than conventional wax, although the Formulation of the invention is still being the one that keeps the gloss better.

The behavior in the closed bag after one week confirms that order.

After two weeks in a cold chamber, and after about being tempered 3-4 hours at room temperature, the order of gloss remains the same:
1. Formulation of the invention, water/alcohol wax.
2. Comparative formulation
3. Conventional formulation, with a gloss lower than at first, but almost equal to the comparative formulation, but much lower than the formulation of the invention. Test conclusions:
   The wax labeled as formulation of the invention, water/alcohol is the one that provides more gloss, keeps it in time, with and without cold, and it is also the one with a lower number of fruits with rotting start at hits, after a count after 2 weeks at room temperature.

The comparative formulation water based-wax, is the one that had less gloss at first, but it keeps it better in cold after 1-2 weeks.

The conventional wax has a lot gloss at first, but in cold gradually losses it as time passes.

Therefore, the water/alcohol-based formulation of the invention, manages to combine the same properties as the waxes dissolved in pure alcohol, i.e. alcohol-based but fulfilling the law, reducing the risk of fire and therefore it could be applied without the need to use special application machines. Its special formulation achieves all this using alcohol as merely a processing aid, the formulation being water based.

Additionally, unlike what usually happens with waxes made with alcohol as a solvent, it is not necessary to temper or heat the fruit when out of the cold chamber.

## Claims

1. A fruit coating formulation **characterized in that** it comprises:
| | w/v |
|---|---|
| Shellac: | 5-21% |
| Plasticizer: | 1-5% |
| Alkali: | 1-5% |
| Polysorbate: | 1-5% |
| Ammonia (25%) : | 0.5-3% |
| Ethanol: | 5-20% |
| Defoamer: | 0.05-0.15% |
| Water: | q.s. 100% |

2. A fruit coating formulation according to claim 1, **characterized in that** it comprises:
| | w/v |
|---|---|
| Shellac: | 10-20% |
| Plasticizer: | 2.7-5% |
| Alkali: | 1.2-4% |
| Polysorbate: | 1-4% |
| Ammonia (25%): | 0.7-2.7% |
| Ethanol: | 7-18% |
| Defoamer: | 0.08-0.15% |
| Water: | q.s. 100% |

3. A fruit coating formulation according to claim 1, **characterized in that** it comprises:
| | w/v |
|---|---|
| Shellac: | 14-20% |
| Plasticizer: | 2.7-4% |
| Alkali: | 1.9-3.8% |
| Polysorbate: | 1.4-3.5% |
| Ammonia (25%): | 0.9-2.4% |
| Ethanol: | 10-16% |
| Defoamer: | 0.09-0.13% |
| Water: | q.s. 100% |

4. A fruit coating formulation according to claim 1, **characterized in that** it comprises:
| | w/v |
|---|---|
| Shellac: | 16-20% |
| Plasticizer: | 3-3.8% |
| Alkali: | 1.4-3.3% |
| Polysorbate: | 2.2-3.15% |
| Ammonia (25%): | 1.1-2% |
| Ethanol: | 12-16% |
| Defoamer: | 0.13-0.15% |
| Water: | q.s. 100% |

5. Use of the formulation defined in one of claims 1 to 4 for coating of fruits selected from pears, apples and citrus.

## Patentansprüche

1. Fruchtbeschichtungsformulierung, **dadurch gekennzeichnet, dass** sie umfasst:
| | Gew./Vol. |
|---|---|
| Schellack: | 5-21% |
| Weichmacher: | 1-5% |
| Alkali: | 1-5% |
| Polysorbat: | 1-5% |
| Ammoniak (25 %): | 0,5-3% |
| Ethanol: | 5-20% |
| Entschäumer: | 0,05-0,15% |
| Wasser: | q.s.100% |

2. Fruchtbeschichtungsformulierung nach Anspruch 1, **dadurch gekennzeichnet, dass** sie umfasst:
| | Gew./Vol. |
|---|---|
| Schellack: | 10-20% |
| Weichmacher: | 2,7-5% |
| Alkali: | 1,2-4% |
| Polysorbat: | 1-4% |
| Ammoniak (25 %): | 0,7-2,7% |
| Ethanol: | 7-18% |
| Entschäumer: | 0,08-0,15% |
| Wasser: | q.s.100% |

3. Fruchtbeschichtungsformulierung nach Anspruch 1, **dadurch gekennzeichnet, dass** sie umfasst:
| | Gew./Vol. |
|---|---|
| Schellack: | 14-20% |
| Weichmacher: | 2,7-4% |
| Alkali: | 1,9-3,8% |
| Polysorbat: | 1,4-3,5% |
| Ammoniak (25 %): | 0,9-2,4% |
| Ethanol: | 10-16% |
| Entschäumer: | 0,09-0,13% |
| Wasser: | q.s.100% |

4. Fruchtbeschichtungsformulierung nach Anspruch 1, **dadurch gekennzeichnet, dass** sie umfasst:
| | Gew./Vol. |
|---|---|
| Schellack: | 16-20% |
| Weichmacher: | 3-3,8% |
| Alkali: | 1,4-3,3% |
| Polysorbat: | 2,2-3,15% |
| Ammoniak (25 %): | 1,1-2% |
| Ethanol: | 12-16% |
| Entschäumer: | 0,13-0,15% |
| Wasser: | q.s.100% |

5. Verwendung der in einem der Ansprüche 1 bis 4 definierten Formulierung zum Beschichten von Früchten ausgewählt aus Birnen, Äpfeln und Zitrusfrüchten.

## Revendications

1. Formulation d'enrobage de fruits **caractérisée en ce qu'**elle comprend :
| | p/v |
|---|---|
| Gomme-laque | 5-21% |
| Plastifiant : | 1-5% |
| Alcali : | 1-5% |
| Polysorbate : | 1-5% |
| Ammoniaque (25 %) : | 0,5-3% |
| Ethanol : | 5-20% |
| Antimousse : | 0,05-0,15% |
| Eau : | q.s.100% |

2. Formulation d'enrobage de fruits selon la revendication 1, **caractérisée en ce qu'**elle comprend :
| | p/v |
|---|---|
| Gomme-laque | 10-20% |
| Plastifiant : | 2,7-5% |
| Alcali : | 1,2-4% |
| Polysorbate : | 1-4% |
| Ammoniaque (25 %) : | 0,7-2,7% |
| Ethanol : | 7-18% |
| Antimousse : | 0,08-0,15% |
| Eau : | q.s.100% |

3. Formulation d'enrobage de fruits selon la revendication 1, **caractérisée en ce qu'**elle comprend :
| | p/v |
|---|---|
| Gomme-laque | 14-20% |
| Plastifiant : | 2,7-4% |
| Alcali : | 1,9-3,8% |
| Polysorbate : | 1,4-3,5% |
| Ammoniaque (25 %) : | 0,9-2,4% |
| Ethanol : | 10-16% |
| Antimousse : | 0,09-0,13% |
| Eau : | q.s.100% |

4. Formulation d'enrobage de fruits selon la revendication 1, **caractérisée en ce qu'**elle comprend :
| | p/v |
|---|---|
| Gomme-laque | 16-20% |
| Plastifiant : | 3-3,8% |
| Alcali : | 1,4-3,3% |
| Polysorbate : | 2,2-3,15% |
| Ammoniaque (25 %) : | 1,1-2% |
| Ethanol : | 12-16% |
| Antimousse : | 0,13-0,15% |
| Eau : | q.s.100% |

5. Utilisation de la formulation définie dans l'une des revendications 1 à 4 pour enrober des fruits choisis parmi les poires, les pommes et les agrumes.
